## Europäisches Patentamt
## European Patent Office
## Office européen des brevets

(11) Publication number: **0 066 597 B1**

(12) **EUROPEAN PATENT SPECIFICATION**

(45) Date of publication of patent specification: **18.06.86**

(21) Application number: **82900051.2**

(22) Date of filing: **09.12.81**

(86) International application number:
**PCT/SE81/00365**

(87) International publication number:
**WO 82/02132 24.06.82 Gazette 82/16**

(51) Int. Cl.⁴: **H 04 M 3/42**

(54) TELEPHONE EXCHANGE.

(30) Priority: **10.12.80 SE 8008665**

(43) Date of publication of application:
**15.12.82 Bulletin 82/50**

(45) Publication of the grant of the patent:
**18.06.86 Bulletin 86/25**

(84) Designated Contracting States:
**AT CH DE FR GB LI NL**

(56) References cited:
**EP-A-0 026 165**
**EP-A-0 046 623**
**CH-C- 225 271**
**DE-C- 738 099**
**GB-A-1 138 925**
**SE-C- 151 956**
**US-A-3 668 317**

**ICC'79 CONFERENCE RECORD, pages 3.2.1-3.2.5**

(73) Proprietor: **Paulsson, Kurt**
**Filipstadsbacken 50**
**S-123 43 Farsta (SE)**
(73) Proprietor: **Svedberg, Valter**
**Rävnäsvägen 43**
**S-125 42 Älvsjö (SE)**
(73) Proprietor: **Trok, Beniamin**
**Nytorsgatan 24**
**S-116 22 Stockholm (SE)**
(73) Proprietor: **Andersson, Jan**
**Sulitelmavägen 15**
**S-161 33 Bromma (SE)**

(72) Inventor: **Paulsson, Kurt**
**Filipstadsbacken 50**
**S-123 43 Farsta (SE)**
Inventor: **Svedberg, Valter**
**Rävnäsvägen 43**
**S-125 42 Älvsjö (SE)**
Inventor: **Trok, Beniamin**
**Nytorsgatan 24**
**S-116 22 Stockholm (SE)**
Inventor: **Andersson, Jan**
**Sulitelmavägen 15**
**S-161 33 Bromma (SE)**

(74) Representative: **Lindblom, Erik J.**
**Caroline Östbergs väg 5**
**S-122 35 Enskede (SE)**

Courier Press, Leamington Spa, England.

**Description**

Technical field

The present invention relates, in a first aspect to a telephone exchange having, a number of telephone sets or extensions connected to a central switching means and an operator's position, an intercept position or similar position, wherein said exchange comprises a unit arranged to detect traffic in and control functions in said exchange, means for providing intercept functions for said extensions, said means being activated by firstly initiating a call (raising a hand-set, pressing a call button, etc.) and secondly activating a predetermined code, and means for causing a subsequent call to an intercepted extension to be connected to a means or position relevant to the code wherein;

a) said unit, including a microcomputer or the like, is connected directly or via a data transmission system to a computer equipment separated from or integrated into said exchange,

b) said computer equipment is connected to and associated with terminal means, including a visual display unit, and means for entering information, relating to the intercept service, into the computer equipment,

c) said display unit is disposed at said operator's, intercept or similar position,

d) said display unit is arranged to present an information stored in the computer equipment,

e) said information is storable either from the telephone set or from said terminal means,

f) that a subsequent internal or external call to said intercepted extension is detected by said unit, said unit then, in a common manner and in case of need, causing a switching within said exchange so that said call is connected to a means or position relevant to the code.

The present invention relates in a second aspect to a telephone exchange having a number of a telephone sets or instruments connected to a central switching means, each telephone set being allocated a telephone number, said switching means comprising a unit arranged to detect traffic in and control switching functions in said exchange, said unit being further so arranged that via a telephone set it is possible to initiate transfer of incoming calls for said telephone set, said initiating of a transfer being achieved by the use of dialling device or some other arrangement on or adjacent to the telephone set.

Description of the prior art

A telephone exchange, according to the first aspect, is disclosed in European Patent Application EP—A—0 026 165, published 01.04.1981, which application falls within the provisions of Articles 54(3) and 54(4) EPC for the designated contracting states AT, CH, FR, GB and NL.

A telephone exchange according to the second aspect is disclosed for example in SE—A—7802725 and GB—A—1 138 925.

The use in telephone exchanges, e.g PABXs, of referral and transfer functions enabling a station/extension to be referred or transferred to another number within the exchange has already been disclosed. Also previously disclosed is the general principle of utilising, with exchanges of this kind, paging systems, via which access is possible to a person to whom a certain extension has been allocated. Examples of such paging systems are those which are used in conjunction with the PABX installations of the Swedish Telecommunications Administration (Televerket) in accordance with System A-344 and which are referred to as Paging System PS/n 344 and Paging System PS/1 (2)-344. The first type of paging installation is intended to be used for the location of staff in a maximum of twenty different paging zones within the area covered by the exchange. It has a capacity of ten calls, and paging can take place simultaneously for persons in different zones. The use of ancillary devices, which may be incorporated as standard equipment, will also permit the simultaneously paging of one person in all zones. The second type of paging installation is intended to be used for the location of staff in a maximum of two paging zones within the area covered by the exchange. It has a capacity of six calls and can serve a maximum of two thousand extensions, with paging being possible in only one zone at a time.

Also previously disclosed is the general principle of utilising telephone answering machines in conjunction with telephone systems.

Description of the present invention
Technical problem

The aim of the present invention is to render more effective and to simplify, above all for the caller, the procedure associated with the referral and transfer functions within exchanges of this kind. The present invention is intended to permit predetermined stations/extensions within the exchange to refer/transfer their own number to the paging system and/or to a centrally located telephone answering machine by the procedure known as automatic referral. The majority of the paging systems available on the market at the present time are entirely independent of the exchanges in their operation. Both these systems and the small number of systems which are linked to the exchanges operate on the principle that anyone wishing to page a person, who is not available on his own telephone instrument, must be aware both of the fact that the person in question may possibly be connected to the paging system, i.e. that he may be located by paging, and of the procedures involved in paging by that particular system. Also, the majority of the telephone answering machines and telephone answering systems available on the market at the present time are personal in their operation, i.e. they are connected to and serve individual stations and extensions.

Solution

One of the aims of the present invention is to provide a telephone exchange according to the first aspect with paging equipment and/or a telephone answering feature.

Thus a telephone exchange, according to the first aspect, is provided, wherein a paging equipment is connected to the exchange, and for an extension, which wants to use the paging feature, a code related to the said extension and a code related to paging feature is stored in said unit and/or a telephone answering machine is connected to the exchange, and for an extension, which wants to use the telephone answering feature, a code related to the said extension and a code related to telephone answering feature are stored in said unit, and wherein a subsequent call to said extension is detected by said unit, and depending upon the code stored in said unit said call is connected to paging feature or to telephone answering feature.

It is a further aim of the invention to provide a telephone exchange according to the second aspect with a connection to paging equipment. Thus a telephone exchange, according to the second aspect, is characterized in;

a) that a paging equipment is connected to said telephone exchange,

b) that said paging equipment is arranged to cooperate with each of a number of portable paging devices constituting a pool,

c) that a person, who wants incoming calls to be connected via the paging equipment to a paging device, collects one of said portable paging devices included in said pool, and that said device is allocated an identification code,

d) that said person transmits, from his telephone set or the like, an access code of said paging equipment to the unit together with said identification code of the actual portable paging device,

e) that a subsequent call to said person's telephone number is detected by said unit and is connected to said paging equipment, said unit supplying the identification code of the respective portable paging device to the paging equipment,

f) that an indication of a call is sent from said paging equipment to said identified portable paging device and

g) that when the portable paging device is activated the person may answer the call by dialling an answer back code from a telephone set or the like.

Advantages

The details proposed mean that demands are no longer placed on the caller or callers by the system solution, which constitutes the exchange in its entirety. The automatic referral and automatic transfer functions are also simplified for the station/extension initiating the function. As far as the caller is concerned, he need be aware neither of the existence of the paging system nor of the procedures applicable to paging. Calls are connected via the usual connection circuits in the exchange to the person being paged when the latter uses the nearest telephone instrument in order to dial an answering code, for example, in reply to the paging signal. The system solution will also permit the use of the simplest type of paging system, i.e. systems of the kind in which the person wishing to locate another person simply indicates that the person concerned is being paged, these being wireless systems known as "pipe" pagers.

In accordance with the invention those persons who have only an occasional requirement of the paging function need not be connected permanantly to the paging system, these being the persons who have not been allocated an individual pager. Where necessary, such persons can be allocated a pager from a pager bank or pool. The manner in which these pagers are connected to the system is for the code to be dialled via the user's own telephone instrument, followed by the number of the pager which has been allocated to him. This manner of allocating pagers permits the optimum use to be made of the paging system, since the number of pagers can be restricted to an absolute minimum.

The invention is further made up of relatively few component parts and which may simply be incorporated into existing types of exchanges at the manufacturing stage in factories or similar premises. The components may also be incorporated into exchanges which have already been entered into service.

Description of the drawings

A preferred embodiment of a device which exhibits significant characteristics of the present invention is described below with reference to the attached drawing, in which:

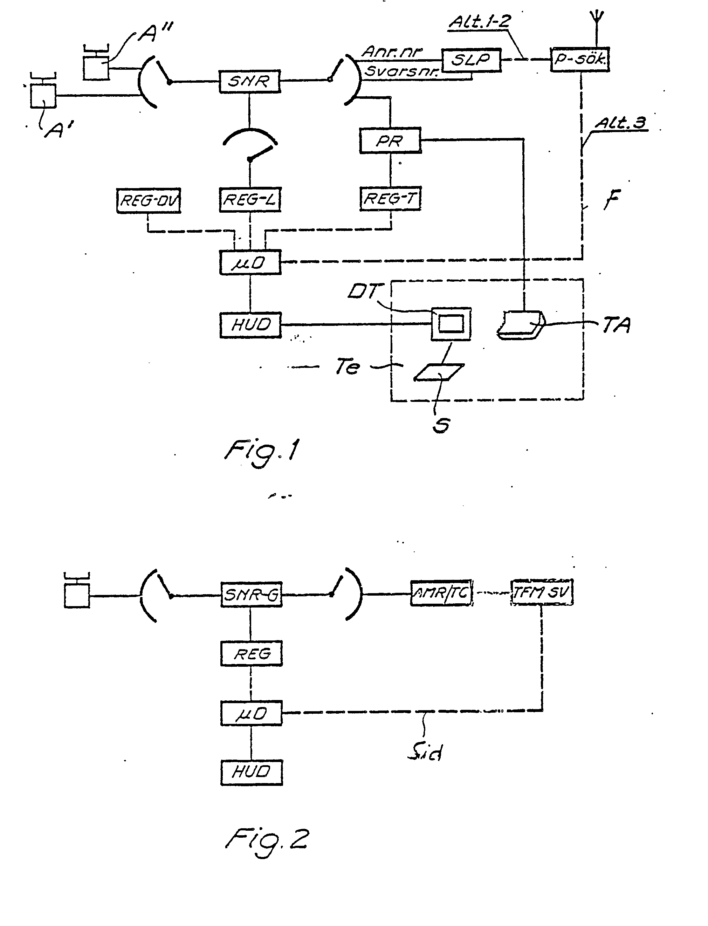

Figure 1 illustrates the basic diagram of the system solution for a PABX equippped not only with a sensor unit for traffic within the PBX, preferably of the microcomputer type, but also with a computer installation which is so arranged as to store information including information relating to any referrals/transfers of the extensions, as well as being integrated with the paging function within the exchange, and

Figure 2 illustrates the basic connection diagram for the telephone answering function in accordance with the invention within the selecting system of a previously disclosed telephone exchange.

Description of the preferred embodiment

In accordance with the above, use may be made of a previously disclosed PABX, for example the PABX known as the Model A-344 within the Swedish Telecommunications Administration, which in one embodiment is equipped with a specific referral facility (cf. Swedish Patent Application 7802725-7). A previously disclosed paging system in accordance with the above may be connected to the PBX concerned. In accordance with the invention, any calls and replies and eventual transferred conversations to said paging function after automatic referral has been requested will be connected via a special paging circuit, designated by SLP in Figure 1. The exchange and said paging installation may be designed in accordance with conventional practice and may be of conventional construction in accordance with said Figure 1.

The connection of incoming calls to an extension A' whose telephone instrument has been automatically referred for paging may be made, as wished, by any of the following three alternatives.

a) Via the operator/monitoring point which is equipped with a referral terminal Te. Said terminal incorporates an operator's unit TA and a data terminal DTT. A printer, indicated by S, may also be installed.

b) Via the paging circuit SLP, which is so arranged as to produce a toner signal or a signal from a voice machine in a previously disclosed manner. In this case, it is the caller himself who makes the connection to the paging function P-Sök.

c) Directly via the paging circuit SLP. In this case the caller is connected automatically for paging of the person being called.

All the alternatives may be incorporated in the design of the exchange in question, with the choice of the desired alternative being made at the time of automatic referral. The exchange may, of course, be provided with only one or two of said alternatives.

The extension A' initiates his transfer to the paging facility by dialling a code via his telephone instrument to connect the paging facility, possibly followed by a combination of digits indicating the estimated time of return. The former code may normally consist of two digits, whilst the latter combination of digits may normally contain four digits. In accordance with the idea of invention, an extension which requests automatic referral only occasionally may be allocated a paging device from a pool of paging devices. In this case the digits which are dialled will also include the number of the paging device which has been allocated. Where the possibility of selecting between two or more of said alternatives is provided, it will be necessary to dial one or more additional digits.

Said initiation of automatic referral means that the unit µD, preferably of the microcomputer type, which monitors traffic within the PBX and generates the control function within the exchange, will note that the extension has referred itself for paging. It will also note the estimated time of return and the paging device number, if appropriate, and/or the alternative selected, if this information is included in the procedure. In those cases in which the exchange makes use of a computer installation HVD which is capable of communicating, preferably in both directions, with said unit, either directly or via a data transmission system, and is capable of being controlled via a terminal linked to the computer installation and/or the data transmission system (see said terminal Te), by means of which information relating to the extensions of the exchange may be entered into the computer installation, the necessary information will be transmitted from the unit µD to the computer HVD.

When calls are made to extension A' which has been automatically referred in the aforementioned manner, a connection can then be established to the operator/monitoring point (Te). This alternative is used when it is wished to connect the caller A'', who represents another station or extension which has been connected by direct dialling, to the operator/monitoring point, who will then make a selective decision as to whether the connection to the desired extension shall be made via the paging facility.

If the unit µD receives a possible extension number from a register REG included in the exchange, said unit will cause the number in the register to be exchanged for the operator's number. The register REG/T will then connect the caller to the operator. When the operator answers the call, a signal will be transmitted from the unit µD to the main computer HVD, said signal including the number of the extension and the number of the actual operator's terminal. The information is then transmitted from the main computer HVD to the operator's station, where it is displayed on the corresponding data terminal DT. The information in question contains details of the extension number and name, etc., together with an indication that the extension in question has been automatically referred to the paging facility. Details of the estimated time of return of the extension and of the number of the paging device may also be displayed.

Connection of the caller A'' to the desired extension A' may now be made from the operator's station in the manner decided by the operator, who will be able to pass on the call to the paging facility via the relay connector PR. The operator may also possibly advise the caller that the person he is calling may be reached via the paging system, and of the procedure necessary in order to page the extension in question. It should be pointed out that, in the case of external traffic connected by the operator, referral information will be displayed on the operator's data terminal whenever an attempt is made to establish a connection with the desired extension.

Another alternative in accordance with the above is for the connection of the caller to be made via the paging circuit SLP, which produces a tone signal or a signal from a voice machine. This alternative is used when it is wished to allow the caller himself to decide whether a connection is to be made to any extension which has automatically transferred its telephone instrument to the paging facility. The circumstances illustrated in Figure 1 relate to the case of internal calls. As far as incoming traffic from an external source is concerned, alternative "a" is used in conjunction with operator-connected traffic of this kind, whereas alternative "c" may also be used in conjunction with direct-dialled traffic.

If the unit µD receives the actual extension number from REG—L, the unit will cause the number contained in the register in question to be exchanged for the number relating to the circuit SLP, this number being indicated by Anr.nr (the number being called) in Figure 1. The register will then connect the caller to the paging circuit SLP, which produces a tone signal or a signal from a voice machine in order to indicate that the desired extension has been referred to the paging facility and that access to this may be obtained by, for example, re-dialling the extension number.

In the event of the caller taking advantage of the opportunity to transfer his call via the paging system, the connection with the desired extension will be established as soon as the person being called uses the nearest telephone instrument within the exchange to dial the paging system answerback code. The person being paged will then be connected to the answerback number for the paging circuit, which is indicated by 'Svarsnr' in the Figure.

A further alternative is for the caller to be connected directly to the paging function "p-sök" via the paging circuit SLP. This alternative is used when it is wished to connect the caller automatically to the paging facility whenever a call is made to an extension which has automatically referred its telephone to the paging facility. The case referred to is applied not only to internal traffic, but also to direct-dialled external traffic, with REG—L being used in the former case and REG—DU in the latter.

If the unit µD receives the actual extension number from REG—L or REG—DU, the unit will cause the number in the register to be exchanged for the number of the paging circuit or equipment SLP, i.e. the number being called, "Anr.nr". The register REG—L will then connect the caller to the paging circuit. Ah the same time a signal will be transmitted from the unit to the paging system "p-sök" to start the paging sequence. This signal is transmitted via a connection F in Figure 1. The signal contains the necessary details relating to the desired extension, and usually consists of four digits which indicate the extension number or the number of the paging device which has been allocated. The person being called replies to the paging by going to the nearest telephone instrument within the exchange and dialling the paging system answerback code. The telephone instrument in question is then connected to the answerback number for the paging circuit, "Svarsnr.", and the connection is established.

The aim of Figure 2 is to illustrate the case in which the user's own extension number has been referred to a centrally located telephone answering machine. The function in this instance is achieved by combining the PBX which is equipped with a referral facility with paging circuits SNR/G and AMR/TC which are capable of through-connection. According to the invention the function is initiated from the user's own telephone instrument, and this may be done by either of the following two alternatives:

d) by simply dialling a code (usually two digits);

e) by dialling a code plus a combination of digits (usually two digits plus four digits).

If the code for automatic referral is received by the actual register, the unit µD will note that the extension which initiated the referral wishes to be transferred to the telephone answering machine. The unit which is aware of what telephone answering machines are free will select a free telephone answering machine and will note that all subsequent calls to the initiating extension are to be connected to the extension number to which the selected telephone answering machine is connected.

In the case of the alternative in which a code only is dialled, the unit µD will cause that number in the register REG to be exchanged for the extension number to which the selected telephone answering machine is connected. The register will then connect the initiating extension to the selected telephone answering machine. The user of the extension will then himself be able, by dialling digits via his own telephone instrument, to control the telephone answering machine which has been allocated to him and to record the desired message, known as the primary information.

In the case of the alternative in which a code plus a combination of digits is dialled, the recording of the necessary information in the unit µD and the selection of a telephone answering machine which is free will take place entirely in accordance with the aforementioned alternatives, although the initiating extension will not be connected to the selected telephone answering machine. Instead, the unit µD will communicate directly with the telephone answering machine on the basis of the combination of digits which it has received. A pre-programmed reply message will be selected. All incoming calls to the initiating extension will be directed via the unit in a previously disclosed manner to the selected telephone answering machine (the extension number).

By dialling the code number via his own telephone instrument, the user of the extension who has asked for the automatic referral of his telephone instrument to the answering machine can establish a connection to the allocated telephone answering machine so that he may check on any incoming messages, known as secondary messages.

The check may be made either by direct communication with the telephone answering machine or via the unit µD. In the former case the connection to the telephone answering machine is made either via the standard input or via a special input. Where a connection is made via the standard input, the unit will advise the extension, by establishing a connection via a by-pass "Sid", that a check can be made. Where a connection is made via the special input, no such information will be required to be supplied by the unit. After a connection has been made to the telephone answering machine control may take place by dialling the appropriate digits via the telephone instrument.

In the event of communication being via µD, any connection will always be made to the standard input of the telephone answering machine, and the unit will be initiated by the checks via the by-pass "Sid".

If it is wished to be able to check the telephone answering machine from any extension telephone, then this possibility can be offered by causing the code number for the check to be followed by a combination of digits, which may best be the caller's own extension number.

Automatic referral may be cancelled in a previously disclosed manner.

The above points relating to automatic referral are basically also applicable to automatic transfer.

As far as paging is concerned, the function of the device described above may be regarded as being in accordance with the following.

A person with the extension number "1304" wishes that all calls to his extension should be connected to the paging facility.

That person collects a paging device with the special number "12" from a bank or pool of portable paging devices. The person than uses his telephone instrument to transmit one of a number of codes "81", "82" or "83" to connect the desired paging facility, followed by "1500" to indicate that he will return at 15.00.

The person can then transmit the following code (if alternative "a" below is desired) 81 1500 12, in addition to which the extension number "1304" is read off on an extension marker.

A call to an extension number belonging to the exchange is noted in the register REG—L and an external call by direct dialling is noted in REG—DV. A call made via the operator is noted in REG—T.

Whenever extension "1304" is requested the number contained in the register REG will be converted via the unit µD into an extension number corresponding to

a) a certain operator's station or a group number giving access to the operators' stations (code 81);

b) a code for the paging equipment (code 82) (paging circuit SLP for leaving spoken messages) or

c) a paging circuit corresponding to the paging function (code 83), with the simultaneous transmission of a signal to the pager indicating that the portable equipment 12 is to be activated depending on the code selected by extension "1304".

Whenever the device 12 is activated the person goes to the nearest extension within the exchange and dials an answerback code, which includes the number of the paging device, i.e. 85 12. The microcomputer µD senses this and converts the number 85—12 in REG—L into the answerback number "svarsnr." for the paging circuit SLP, thereby establishing the connection via the SLP.

The unit µD is accordingly so arranged as to be capable of determining whether a call is to be connected directly to an extension or whether that extension is connected for referral (operator/monitoring point), for transfer, for paging or for telephone answering.

If referral is to be made to the operator (or to the monitoring point), when the operator replies the unit µD is so arranged that it will transmit a signal to the HVD instruction it to display the stored information on extension A' (directory details) in visual form on a terminal.

Further details of the interaction of the various components may be found in EP—A—0 026 165.

The invention is not restricted to the embodiment illustrated above by way of example, but may undergo modifications within the scope of the following Patent Claims.

**Claims**

1. A telephone exchange, having a number of telephone sets (A', A'') or extensions connected to a central switching means and an operator's position (Te), an intercept position or similar position, wherein said exchange comprises a unit (µD) arranged to detect traffic in and control functions in said exchange, means for providing intercept functions for said extensions, said means being activated by firstly initiating a call (raising a hand-set, pressing a call button, etc.) and secondly activating a predetermined code, and means for causing a subsequent call to an intercepted extension to be connected to a means or position relevant to the code, wherein

a) said unit (µD), including a microcomputer or the like, is connected directly or via a data transmission system to a computer equipment (HVD) separated from or integrated into said exchange,

b) said computer equipment (HVD) is connected to and associated with terminal means (Te) including a visual display unit (DTT) and means (S) for entering information, relating to the intercept service, into the computer equipment (HVD),

c) said display unit is disposed at said operator's intercept or similar position,

d) said display unit (DTT) is arranged to present an information stored in the computer equipment (HVD),

e) said information is storable either from the telephone set or from said terminal means (Te),

f) that a subsequent internal or external call to said intercepted extension (A'-extension) is detected by said unit (µD), said unit then, in a common manner and in case of need, causing a switching within said exchange so that said call is connected to a means or a position relevant to the code, wherein a paging equipment is connected to the exchange, and for an extension which wants to use the paging feature, a code related to the said extension and a code related to paging feature is stored in said unit (µD), and/or a telephone answering machine is connected to the exchange, and for an extension, which wants to use the telephone answering feature, a code related to the said extension and a code related to telephone answering feature is stored in said unit (µD), and wherein a subsequent call to said extension is detected by said unit (µD), and depending upon the code stored in said unit said call is connected to paging feature or to telephone answering feature.

2. A telephone exchange according to claim 1, characterized in that a subsequent call to said extension is, depending upon stored information in said unit (µD), either connected directly to a paging equipment, by means of which a called person can be informed of the fact that he is paged, or connected to an operator, who can determine whether or not said extension is subject to paging feature, said operator deciding, depending on the outcome of a conversation with the caller, whether a connection should be established to the paging equipment or whether the caller should be advised to call later on.

3. An exchange in accordance with claim 1, characterized in that the computer equipment (HVD) is capable of communicating, either directly with said unit (µD) or via a data transmission system, and is capable of being controlled via said terminal (Te) linked to the computer equipment, by means of which information relating to an extension of the exchange may be entered into the computer equipment (HVD), in addition to which said unit (µD) is so arranged that, when monitoring traffic to extensions of the exchange, it is controlled by the information, which has been entered into the computer equipment (HVD), such that said caller is connected directly to an operator, whereby the operator, after having obtained the appropriate information from the computer installation via said terminal (Te), advise the caller of the time of return, etc.

4. An exchange in accordance with any of the preceding claims, characterized in that, in the case that a connection has been made directly to the paging equipment via a connecting circuit (SLP), said circuit is arranged to produce a tone signal or a message from a voice machine, by which the caller himself is given the opportunity to decide whether the actual call should be passed on to the called person.

5. An exchange in accordance with claim 4, characterized in that when said unit (µD), in conjunction with the call made by the caller, obtains the actual number for the extension from a register (REG) the unit causes the number in the register to be changed to a number for the connecting circuit (SLP), in that the register then passes on the caller to the connecting circuit (SLP), which produces a tone signal or a message from a voice machine.

6. An exchange in accordance with anyone of patent claims 1, 2 or 5, characterized in that when the unit (µD), in conjunction with the call made by the caller, obtains the actual number for the extension from a register (REG) the unit causes the number in the register to be changed to a number for a connecting circuit (SLP), in that the register then passes on the caller to the connecting circuit at the same time as the unit (µD) transmits a signal to the paging system (p-sök) to start the paging operation, in that a message, containing the necessary details relating to the extension being called, will normally consist of four digits, which indicate the number of the extension and the number of the appropriate paging device, in that said person, to whom the extension belongs, may answer the call by using any telephone instrument or set, e.g. the nearest telephone instrument within the exchange, via which he may dial an answering code for the paging facility, and in that the telephone instrument, which is used, will then be connected to the answering number of the connecting circuit (SLP), thereby establishing a connection.

7. An exchange in accordance with anyone of patent claims 1, 2, 5 or 6, characterized in that connecting circuits (SNR/G and/or AMR/TC), capable of through-connection, are used to make connections to a bank of telephone answering machines, in that an automatic referral/automatic transfer is initiated either by dialling predetermined codes, or by dialling predetermined codes together with an additional combination of digits, consisting of supplementary digits, in that, when said predetermined code is received in a register (REG), said unit notes that the predetermined extension requires to be referred automatically to a telephone answering machine, in that the unit (µD) is aware of each free machine in the bank of telephone answering machines and thus selects one of the telephone answering machines and notes that all subsequent calls to the initiating extension are to be passed on to an extension number, to which the selected telephone answering machine has been connected.

8. An exchange according to claim 7, characterized in that in the event that only a predetermined code is dialled, the unit causes that number in the register to be changed to the number of the outlet (extension number) to which a selected telephone answering machine is connected.

9. An exchange according to claim 8, characterized in that the register connects any extension, which has requested to be referred automatically to the selected telephone answering machine, to the person, to whom the extension belongs, and he himself is able, by a dialling via his own telephone instrument, to control the telephone answering machine, which has been allocated to him, and to record a desired message or primary information, in that, in the event of the predetermined code being dialled together with the additional combination of digits, the unit records the necessary information and the choice of free telephone answering machine, whereby no connection is made from the initiating extension to the selected telephone answering machine, but the unit instead communicates directly with the telephone answering machine on the basis of the combination of digits received, thereby selecting a pre-programmed reply message, and in that all subsequent incoming calls to that extension which initiate referral/transfer to the telephone answering machine are passed on by the unit to the selected telephone answering machine (extension number).

10. An exchange in accordance with claim 7, characterized in that by dialling from his own telephone instrument, the person who has automatically referred his extension to the telephone answering machine is able to obtain a connection to the allocated telephone answering machine enabling him to check any incoming messages (secondary messages), and that, in the event of the telephone answering machine being required to be accessible for checking from any extension, this checking shall be possible by causing a code number for the checking facility to be followed by a combination of digits, which may suitable correspond to the actual number of the caller's own extension.

11. An exchange in accordance with claim 4 when appended to claim 2, characterized in that the exchange is equipped with three alternative ways of automatically referring/automatically transferring calls to the paging facility, said three alternatives relating respectively to connection via the operator, who is provided with a referral terminal, connection via said connecting circuit (SLP), which is so arranged as to produce a tone signal and/or a message from a voice machine, and connection directly via the connecting circuit, and in that the person, whose extension has to be automatically referred or automatically transferred, is able, by dialling his own code to select the alternative which shall apply to the current referral/transfer.

12. A telephone exchange having a number of telephone sets or instruments connected to a central switching means, each telephone set being allocated a telephone number, said switching means comprising a unit ($\mu$D) arranged to detect traffic in and control switching functions in said exchange, said unit ($\mu$D) being further so arranged that via a telephone set it is possible to initiate transfer of incoming calls intended for said telephone set, said initiating of a transfer being achieved by use of dialling devices or some other arrangement on or adjacent to the telephone set, characterized in;

a) that a paging equipment is connected to said telephone exchange,

b) that said paging equipment is arranged to cooperate with each of a number of portable paging devices constituting a pool,

c) that a person, who wants incoming calls to be connected via the paging equipment to a paging device, collects one of said portable paging devices included in said pool, and that said device is allocated an identification code,

d) that said person transmits, from his telephone set or the like, an access code of said paging equipment to the unit ($\mu$D) together with said identification code of the actual portable paging device,

e) that a subsequent call to said person's telephone number is detected by said unit ($\mu$D) and is connected to said paging equipment, said unit ($\mu$D) supplying the identification code of the respective portable paging device to the paging equipment,

f) that an indication of a call is sent from said paging equipment to said identified portable paging device and

g) that when the portable paging device is activated the person may answer the call by dialling an answerback code from a telephone set or the like.

**Patentansprüche**

1. Eine Telefonzentrale mit einer Reihe von Fernsprechapparaten (A', A'') oder Nebenstellen, die an eine zentrale Schaltvorrichtung und einer Bedienungsstelle (Te) angeschlossen sind, mit einer Anzapf- oder vergleichbaren Vorrichtung, wobei diese Telefonzentrale aus einer Einheit ($\mu$D), mit der der Fernsprechverkehr und die Steuerfunktionen in dieser Telefonzentrale erfaßt werden einer Vorrichtung zur Schaltung der Anzapffunktionen bei den erwähnten Nebenstellen, die dadurch eingeschaltet wird, daß zunächst ein Anruf eingeleitet (durch Abheben eines Hörers, Drücken einer Ruftaste usw.) und anschließend ein vorgegebener Code angewählt wird, sowie einer Vorrichtung besteht, mit der ein anschließend eingehender Anruf an eine angezapfte Nebenstelle mit einer Vorrichtung oder Stelle verbunden wird, die dem betreffenden Code entspricht.

a) Die erwähnte Einheit ($\mu$D), zu der ein Microcomputer oder ein ähnliches Gerät gehört, ist direkt oder über ein Datenübertragungssystem mit einem Rechner (HVD) verbunden, der entweder getrennt aufgestellt oder in die erwähnte Telefonzentrale eingebaut ist.

b) Dieser Rechner (HVD) ist mit einem angeschlossenen Datenendgerät (Te) verbunden, zu dem ein Datensichtgerät (DDT) und eine Eingabevorrichtung (S) gehören, mit der Informationen Informationen in Bezug auf die Anzapfeinrichtung in den Rechner (HVD) eingegeben werden können.

c) Das erwähnte Datensichtgerät ist am Bedienungsplatz oder an der Anzapf- oder gleichartigen Schaltstelle aufgestellt.

d) Das erwähnte Datensichtgerät (DDT) ist derart eingerichtet, daß es einen im Rechner (HVD) gespeicherten Datenbestand darstellen kann.

e) Dieser Datenbestand kann entweder über den Fernsprechapparat oder über das erwähnte Datenendgerät (Te) abgespeichert werden.

f) Ein nachfolgender interner oder externer Anruf an die erwähnte angezapfte Nebenstelle (Nebenstelle A') wird von der erwähnten Einheit ($\mu$D) erfaßt, die dann in gemeinsamer Weise und im Bedarfsfall einen Schaltvorgang in dieser Nebenstelle auslöst, sodaß der erwähnte Anruf mit einer Vorrichtung oder Stelle verbunden wird, die dem betreffenden Code entspricht.

Hierbei ist an die Telefonzentrale eine Personenrufanlage angeschlossen. Für eine Nebenstelle, von der aus die Personenrufanlage in Anspruch genommen werden soll, ist in der erwähnten Einheit (µD) ein Code, der dieser Nebenstelle entspricht, sowie ein weiterer Code für die Personenrufanlage gespeichert. Zusätzlich oder ersatzweise ist an die Telefonzentrale ein Anrufbeantworter angeschlossen. Für eine Nebenstelle, von der aus der Anrufbeantworter in Anspruchgenommen werden soll, ist in der erwähnten Einheit (µD) ein Code, der dieser Nebenstelle entspricht, sowie ein weiterer Code für den Anrufbeantworter gespeichert. Wird anschließend von der erwähnten Einheit (µD) ein Anruf an die betreffende Nebenstelle erfaßt, so wird je nach dem in dieser Einheit gespeicherten Code der Anruf mit der Personenrufanlage oder mit dem Anrufbeantworter verbunden.

2. Eine Telefonzentrale gemäß dem Patentanspruch 1, die dadurch gekennzeichnet ist, daß je nach der in der erwähnten Einheit (µD) gespeicherten Information en anschließender Anruf an die betreffende Nebenstelle entweder direkt mit einer Personenrufanlage verbunden wird, wodurch die angerufene Person auf die Rufsuche nach ihr hingewiesen werden kann, oder mit einer Bedienungsperson verbunden wird, die feststellen kann, ob für die betreffende Nebenstelle eine Personenruffunktion vorgesehen ist, und die nach Rücksprache mit dem Anrufer entscheiden kann, ob eine Verbindung mit der Personenrufanlage hergestellt werden oder ob der Anrufer später erneut anrufen soll.

3. Eine Telefonzentrale gemäß dem Patentanspruch 1, die dadurch gekennzeichnet ist, daß der Rechner (HVD) entweder direkt mit der erwähnten Einheit (µD) oder über ein Datenübertragungssystem eine Verbindung herstellen und über das an den Rechner angeschlossene Datenendgerät (Te) gesteuert werden kann, mit denen Informationen über eine bestimmte Nebenstelle der Telefonzentrale eingegeben werden können. Die erwähnte Einheit (µD) ist außerdem derart gestaltet, daß bei der Überwachung des Gesprächsverkehrs zu den Nebenstellen der Telefonzentrale sie durch die in den Rechner (HVD) eingegebenen Informationen gesteuert werden kann, sodaß der erwähnte Anrufer direkt mit der Vermittlung verbunden wird, wobei die Bedienungsperson in der Vermittlung dem Anrufer die Rückkehrzeit usw. mitteilt, nachdem sie über das erwähnte Datenendgerät (Te) aus dem Rechner die entsprechenden Informationen abgerufen hat.

4. Eine Telefonzentrale gemäß einem der vorstehenden Patentansprüche, die dadurch gekennzeichnet ist, daß bei einer direkten Verbindung mit der Personenrufanlage über eine Verbindungsschaltung (SLP) diese Schaltung derart gestaltet ist, daß sie einen Signalton oder eine Meldung aus einem Stimmengenerator abgibt, wodurch der Anrufer selbst entscheiden kann, ob sein Anruf an die angerufene Person weitergeleitet werden soll.

5. Eine Telefonzentrale gemäß dem Patentanspruch 4, die dadurch gekennzeichnet ist, daß wenn die erwähnte Einheit (µD) zusammen mit dem Anruf eines Anrufers aus einem Register (REG) die tatsächliche Nummer der betreffenden Nebenstelle erhält, von der Einheit bewirkt wird, daß die Nummer in dem Register durch eine Nummer für die Verbindungsschaltung (SLP) ersetzt wird, wobei das Register den Anrufer dann an die Verbindungsschaltung (SLP) weiterleitet, von der ein Signalton oder eine von einem Stimmengenerator erzeugte Meldung abgegeben wird.

6. Eine Telefonzentrale gemäß einem der Patentansprüche 1, 2 oder 5, die dadurch gekennzeichnet ist, daß wenn die erwähnte Einheit (µD) zusammen mit dem Anruf eines Anrufers aus einem Register (REG) die tatsächliche Nummer der betreffenden Nebenstelle erhält, von der Einheit bewirkt wird, daß die Nummer in dem Register durch eine Nummer für die Verbindungsschaltung (SLP) ersetzt wird, wobei das Register den Anrufer dann an die Verbindungsschaltung weiterleitet und gleichzeitig von der Einheit (µD) ein Signal an die Personenrufanlage (p-sök) zur Einleitung des Rufvorgangs übermittelt wird. Diese Meldung, die die erforderlichen Angaben für die angerufene Nebenstelle enthält, besteht in der Regel aus vier Ziffern, mit denen die Nummern der Nebenstelle und die Nummer des entsprechenden Empfangsgerätes gekennzeichnet werden. Die Person, zu der die betreffende Nebenstelle gehört, kann den Anruf beantworten, indem sie einen Fernsprechapparat oder Hörer verwendet, beispielsweise den nächstgelegenen Fernsprechapparat innerhalb der Telefonzentrale, von dem aus sie einen Rückmeldecode für die Personenrufanlage wählt; der verwendete Fernsprechapparat wird dann mit der Rückmeldenummer der Verbindungsschaltung (SLP) verbunden, wodurch die Gesprächsverbindung zustande kommt.

7. Eine Telefonzentrale gemäß einem der Patentansprüche 1, 2, 5 oder 6, die dadurch gekennzeichnet ist, daß durchschaltfähige Verbindungsschaltungen (SNR/G und/oder AMR/TC) eingesetzt werden, um Verbindungen mit einem Bestand von Anrufbeantwortern herzustellen, daß eine automatische Rükgabe/Weiterleitung entweder durch das Wählen von vorgegebenen Codes oder durch das Wählen von vorgegebenen Codes sowie von einer zusätzlichen Zahlenkombination eingeleitet wird, daß bei dem Eingang dieses vorgegebenen Codes in einem Register (REG) die erwähnte Einheit erkennt, daß Anrufe an die betreffende Nebenstelle automatisch an einen Anrufbeantworter geschaltet werden, und daß die Einheit (µD) jeden freien Anrufbeantworter aus dem Bestand der Anrufbeantworter feststellen und erkennen kann, daß alle nachfolgenden Anrufe an die Nebenstelle, von der die Rückgabe eingeleitet worden ist, an die Nummer einer Nebenstelle weiterzuleiten sind, mit der der gewählte Anrufbeantworter verbunden ist.

8. Eine Telefonzentrale gemäß dem Patentanspruch 7, die dadurch gekennzeichnet ist, daß bei der Anwahl von nur einem Code von der Einheit bewirkt wird, daß die Nummer in dem Register durch die Nummer des Ausgangs (Nebenstellen-Nummer) ersetzt wird, mit dem ein ausgewählter Anrufbeantworter verbunden ist.

9. Eine Telefonzentrale gemäß dem Patentanspruch 8, die dadurch gekennzeichnet ist, daß von dem Register jede Nebenstelle, die zur automatischen Weiterschaltung an den Anrufbeantworter eingestellt worden ist, mit der Person verbunden wird, zu der diese Nebenstelle gehört. Die betreffende Person kann den ihm zugeordneten Anrufbeantworter von seinem eigenen Fernsprechapparat aus anwählen, ihn steuern und eine beliebige Mitteilung oder Primärinformation aufnehmen. Falls der vorgegebene Code zusammen mit der zusätzlichen Zahlenkombination gewählt wird, so wird von der Einheit der erforderliche Information ausgezeichnet und ein freier Anrufbeantworter gewählt, wobei von der Nebenstelle, von der aus die Rückgabe eingeleitet wird, keine Verbindung zu dem ausgewählten Anrufbeantworter hergestellt wird, jedoch die Einheit aufgrund der von ihr erhaltenen Zahlenkombination direkt mit dem Anrufbeantworter in Verbindung tritt und auf diese Weise eine vorprogrammierte Antwortmeldung auswählt. Alle anschließend eingehenden Anrufe an die Nebenstelle, von der aus die Rückgabe/Weiterleitung an den Anrufbeantworter eingeleitet worden ist, werden von der Einheit an den ausgewählten Anrufbeantworter (Nebenstellen-Nummer) weitergeleitet.

10. Eine Telefonzentrale gemäß dem Patentanspruch 7, die dadurch gekennzeichnet ist, daß die Person, die ihre Nebenstelle automatisch auf den Anrufbeantworter geschaltet hat, diesen von ihrem eigenen Fernsprechapparat anwählen und alle eingegangenen Mitteilungen (Sekundärinformationen) abrufen kann, und daß falls der Anrufbeantworter von jeder beiliebigen Nebenstelle aus erreichbar sein soll, diese Abfrage möglich ist, indem im Anschluß an eine Code-Nummer für die Abfrage eine Zahlenkombination gewählt wird, die zweckmäßigerweise der Nummer der Nebenstelle des betreffenden Anrufers entspricht.

11. Eine Telefonzentrale gemäß dem Patentanspruch 4 als Anhang zu dem Patentanspruch 2, die dadurch gekennzeichnet ist daß die Telefonzentrale mit drei verschiedenen Funktionsmöglichkeiten zur automatischen Rückgabe/Weiterleitung von Anrufen an die Personenrufanlage ausgestattet ist. Diese drei Funktionsmöglichkeiten beziehen sich jeweils auf eine Verbindung über die Vermittlung, die mit einem Rückgabe-Datenendgerät versehen ist, eine Verbindung über die erwähnte Verbindungsschaltung (SLP), die derart gestaltet ist, daß sie einen Signalton oder eine von einem Stimmengenerator erzeugte Meldung abgibt, sowie eine Verbindung, die direkt über die Verbindungsschaltung erfolgt und bei der die Person, bei deren Nebenstelle die Anrufe automatisch zurückgegeben oder weitergeleitet werden, durch Wählen seines eigenen Code die Funktionsmöglichkeit festlegen kann, die für die betreffende Rückgabe/Weiterleitung gelten soll.

12. Eine Telefonzentrale mit einer Anzahl von Fernsprechapparaten, die mit einer zentralen Schaltvorrichtung verbunden sind, wobei jedem Fernsprechapparat eine Telefon-Nummer zugeordnet ist, und wobei die erwähnte Schaltvorrichtung eine Einheit (µD) enthält, mit der in dieser Telefonzentrale der Fernsprechverkehr erfaßt und die Schaltfunktionen gesteuert werden können, wobei die erwähnte Einheit (µD) außerdem derart gestaltet ist, daß über einen Fernsprechapparat die Weiterleitung von eingehenden Anrufen an den erwähnten Fernsprechapparat eingeleitet werden kann, wobei diese Einleitung der Weiterleitung durch die Wählvorrichtung oder einem sonstigen Mechanismus in oder neben dem Fernsprechapparat erfolgen kann, die dadurch gekennzeichnet ist, daß

a) an diese Telefonzentrale eine Personenrufanlage angeschlossen ist;

b) diese Personenrufanlage mit jedem von einer Reihe tragbarer Empfangsgeräte zusammenwirken kann, die einen Pool bilden;

c) eine Person, die eingehende Anrufe über die Personenrufanlage mit einem Empfangsgerät verbinden will, eines der in dem Pool enthaltenen tragbaren Geräte auswählt und ihm einen Kennungs-Code zuordnet;

d) diese Person von seinem Fernsprechapparat oder eine ähnlichen Einrichtung an die Einheit (µD) einen Zugangs-Code für die erwähnte Personen-Rufanlage zusammen mit dem erwähnten Kennungs-Code des betreffenden tragbaren empfangsgerätes übermittelt;

e) ein anschließender Anruf an die Telefon-Nummer der erwähnten Person von der erwähnten Einheit (µD) erfaßt und mit der erwähnten Personenrufanlage verbunden wird, wobei von der erwähnten Einheit (µD) der Kennungs-Code des entsprechenden tragbaren Empfangsgerätes an die Personenrufanlage gegeben wird;

f) von der erwähnten Personenrufanlage an das erwähnte erkannte tragbare Empfangsgerät eine Anrufmeldung gesendet wird, und daß

g) bei Einschaltung des tragbaren Empfangsgerätes die Person den Anruf beantworten kann, indem sie von einem Fernsprechapparat oder einer ähnlichen Einrichtung einen Rückmelde-Code wählt.

**Revendications**

1. Central téléphonique comportant un certain nombre d'appareils téléphoniques (A', A'') ou d'appareils supplémentaires connectés à un dispositif de commutation central et une position de standardiste (Te), une position d'interception ou une position semblable, le central comprenant

une unité (µD) propre à détecter le trafic et à commander des fonctions dans le central, un dispositif pour fournir des fonctions d'interception pour les appareils supplémentaires, ce dispositif étant mis en fonction en commençant par l'amorçage d'un appel (décrochage d'un combiné, enfoncement d'un bouton d'appel, etc.), puis en activant un code prédéterminé, et un dispositif pour provoquer la connexion d'un appel ultérieur destiné à un appareil supplémentaire intercepté à connecter à un dispositif ou à une position correspondant au code, dans lequel:

a) l'unité (µD), comprenant un micro-ordinateur ou l'équivalent, est connectée directement ou par l'intermédiaire d'un système de transmission de données à un matériel informatique (HVD) séparé du central ou intégré dans celui-ci,

b) le matériel informatique (HVD) est connecté et associé au terminal (Te) comprenant un appareil de visualisation (DTT) et un dispositif (S) pour introduire de l'information se rapportant au service d'interception dans le matériel informatique (HVD),

c) le dispositif de visualisation est disposé à la position de standardiste, d'interception ou analogue,

d) le dispositif de visualisation (DTT) peut présenter une information stockée dans le matériel informatique (HVD),

e) l'information peut être stockée soit à partir de l'appareil téléphonique, soit à partir du terminal (Te),

f) un appel interne ou externe ultérieur destiné à l'appareil supplémentaire intercepté (appareil supplémentaire A') est détecté par l'unité (µD), cette unité provoquant alors, d'un manière courante et en cas de besoin, une commutation dans le central, de telle sorte que l'appel soit connecté à un dispositif ou à une position correspondant au code, dans lequel un équipement de recherche de personnes est connecté au central et, pour un appareil supplémentaire qui souhaite utiliser la fonction de recherche de personnes, un code se rapportant à ce poste supplémentaire et un code se rapportant à la fonction de recherche de personnes sont stockés dans l'unite (µD) et/ou un répondeur téléphonique est connecté au central et, pour un appareil supplémentaire qui souhaite utiliser la fonction de répondeur téléphonique, un code se rapportant à l'appareil supplémentaire et un code se rapportant à la fonction de répondeur téléphonique sont stockés dans l'unité (µD), et un appel ultérieur à l'appareil supplémentaire est détecté par l'unité (µD) et, en fonction du code stocké dans cette unité, l'appel est connecté à la fonction de recherche de personnes ou à la fonction de répondeur téléphonique.

2. Central téléphonique suivant la revendication 1, caractérisé en ce qu'un appel ultérieur à l'appareil supplémentaire est, en fonction de l'information stockée dans l'unité (µD), soit connecté directement à un équipement de recherche de personnes au moyen duquel une personne appelée peut être informée du fait qu'elle est recherchée, soit connecté à un standardiste qui peut déterminer si l'appareil supplémentaire fait ou non l'objet d'une recherche, le standardiste décidant, en fonction de l'issue d'une conversation avec l'appelant, si une connexion doit être établie à l'équipement de recherche de personnes ou si l'appelant doit être enjoint de rappeler plus tard.

3. Central suivant la revendication 1, caractérisé en ce que le matériel informatique (HVD) est à même de communiquer, soit directement avec l'unité (µD), soit par l'intermédiaire d'un système de transmission de données et peut être commandé par l'intermédiaire du terminal (Te) relié au matériel informatique au moyen duquel de l'information conernant un appareil supplémentaire du central peut être introduite dans le matériel informatique (HVD), l'unité (µD) étant en outre agencée d'une manière telle que, lorsqu'elle surveille le trafic vers des appareils supplémentaires du central, elle soit commandée par l'information qui a été introduite dans le matériel informatique (HVD), de telle sorte que l'appelant soit connecté directement à un standardiste, lequel, après avoir obtenu l'information adéquate de l'installation d'ordinateur par l'intermédiaire du terminal (Te), avise l'appelant de l'heure de retour, etc.

4. Central. suivant l'une quelconque des revendications précédentes, caractérisé en ce que, dans la cas où une connexion a été établie directement à l'équipement de recherche de personnes par l'intermédiaire d'un circuit de connexion (SLP), ce circuit est conçu pour produire un signal de tonalité ou un message d'un synthétiseur de parole par lequel l'appelant lui-même a l'occasion de décider si l'appel effectif doit être transmis à la personne demandée.

5. Central suivant la revendication 4, caractérisé en ce que lorsque l'unité (µD), dans le cadre de l'appel effectué par l'appelant, obtient le numéro effectif de l'appareil supplémentaire d'un registre (REG), elle change le numéro contenu dans le registre en un numéro du circuit de connexion (SLP), et le registre transfère alors l'appelant au circuit de connexion (SLP) qui produit un signal de tonalité ou un message d'un synthétiseur de parole.

6. Central suivant l'une quelconque des revendications 1, 2 ou 5, caractérisé en ce que, lorsque l'unité (µD), dans le cadre de l'appel effectué par l'appelant, obtient le numéro réel de l'appareil supplémentaire d'un registre (REG), elle change le numéro présent dans le registre en un numéro d'un circuit de connexion (SLP), le registre transfère alors l'appelant au circuit de connexion au moment même où l'unité (µD) transmet un signal au système de recherche de personnes (p-sök) pour faire démarrer l'opération de recherche de personnes, un message, contenant les détails nécessaires pour l'appareil supplémentaire demandé, est normalement constitué de quatre chiffres qui indiquent le numéro de l'appareil supplémentaire et le numéro du récepteur de recherche de personnes approprié, la dite personne, auquel l'appareil supplémentaire appartient, peut répondre à l'appel au moyen de n'importe quel appareil téléphonique, par exemple l'appareil téléphonique le plus proche dans le central, au moyen duquel il peut composer un code de réponse du système de recherche de personnes et l'appareil téléphonique qui est utilisé est alors connecté au numéro de réponse du circuit de connexion (SLP), établissant ainsi une connexion.

7. Central suivant l'une quelconque des revendications 1, 2, 5 ou 6, caractérisé en ce que des circuits de connexion (SNR/G et/ou AMR/TC), à même de permettre une interconnexion, sont utilisés pour établir des connexions à une banque de répondeurs téléphoniques, un renvoi automatique/transfert automatique est amorcé soit par sélection de codes prédéterminés, soit par sélection de codes prédéterminés ainsi que d'une combinaison supplémentaire de chiffres constituant des chiffres supplémentaires, lorsque le code prédéterminé est reçu dans un registre (REG), l'unité note que l'appareil supplémentaire prédéterminé demande un renvoi automatique à un répondeur téléphonique, l'unité (µD) connaît chaque répondeur libre dans la banque de répondeurs téléphoniques, sélectionne donc un des répondeurs téléphoniques et note que tous les appels ultérieurs à l'appareil supplémentaire d'amorçage doivent être passés à un numéro d'appareil supplémentaire auquel le répondeur téléphonique sélectionné a été connecté.

8. Central suivant la revendication 7, caractérisé en ce que dans le cas où un code prédéterminé seulement est sélectionné, l'unité provoque le remplacement du numéro présent dans le registre par le numéro de la sortie (numéro d'appareil supplémentaire) à laquelle un répondeur téléphonique sélectionné est connecté.

9. Central suivant la revendication 8, caractérisé en ce que le registre connecte un appareil supplémentaire quelconque qui a demandé le renvoi automatique au répondeur téléphonique choisi, à la personne à laquelle l'appareil supplémentaire appartient et qui est à même, par la sélection d'un numéro par l'intermédiaire de son propre appareil téléphonique, de commander le répondeur téléphonique qui lui a été attribué et d'enregistrer un message souhaité ou une information primaire, en ce que, dans le cas où le code prédéterminé est sélectionné en compagnie de la combinaison supplémentaire de chiffres, l'unités enregistre l'information nécessaire et le choix du répondeur téléphonique libre, auquel cas aucune connexion n'est établie à partir de l'appreil supplémentaire d'amorçage au répondeur téléphonique sélectionné, mais l'unité communique au contraire directement avec le répondeur téléphonique sur base de la combinaison de chiffres reçue, sélectionnant ainsi un message de réponse préprogrammé et en ce que tous les appels entrants ultérieurs vers cet appareil supplémentaire qui amorce le renvoi/ transfert au répondeur téléphonique sont transmis par l'unité au répondeur téléphonique sélectionné (numéro d'appareil supplémentaire).

10. Central suivant la revendication 7, caractérisé en ce qu'en effectuant une sélection à partir de son propre appareil téléphonique, la personne qui a automatiquement renvoyé son appareil supplémentaire au répondeur téléphonique est à même d'obtenir une connexion au répondeur téléphonique qui lui a été attribué, ce qui lui permet de vérifier la présence de messages entrants éventuels (messages secondaires) et en ce que, au cas où le répondeur téléphonique doit être accessible pour la vérification à partir de n'importe quel appareil supplémentaire, cette vérification sera rendue possible en faisant suivre un numéro de code du système de vérification d'une combinaison de chiffres qui peut avantageusement correspondre au numéro réel de l'appareil supplémentaire propre de l'appelant.

11. Central suivant la revendication 4 découlant de la revendication 2, caractérisé en ce qu'il est équipé de trois variantes permettant de renvoyer automatiquement/transférer automatiquement des appels au système de recherche de personnes, ces trois variantes se rapportant respectivement, à une connexion par l'intermédiaire du standardiste qui est équipé d'un terminal de renvoi, à une connexion par l'intermédiaire du circuit de connexion (SLP) qui est agencé de manière à produire un signal de tonalité et/ou un message d'un synthétiseur de parole, et à une connexion directement par l'intermédiaire du circuit de connexion, et en ce que la personne, dont l'appareil supplémentaire doit être automatiquement renvoyé ou automatiquement transféré, est à même, en sélectionnant son propre code, de sélectionner la variante qui s'appliquera au renvoi/transfert en cours.

12. Central téléphonique comportant un certain nombre d'appareils téléphoniques connectés à un dispositif de commutation central, chaque appareil téléphonique correspondant à un numéro de téléphone, le dispositif de commutation comprenant une unité (µD) propre à détecter le trafic et à commander des fonctions de commutation dans le central, cette unité (µD) étant en outre agencée de telle sorte que, par l'intermédiaire d'un appareil téléphonique, il soit possible d'amorcer le transfert d'appels entrants destinés à l'appareil téléphonique, l'amorçage d'un transfert étant réalisé à l'aide de dispositifs de sélection ou d'un autre système prévu sur l'appareil téléphonique ou près de celui-ci, caractérisé en ce que:

a) un équipement de recherche de personnes est connecté au central téléphonique,

b) l'équipement de recherche de personnes est conçu à coopérer avec chaque récepteur d'un certain nombre de récepteurs de recherche de personnes portables constituant un ensemble,

c) une personne qui souhaite que des appels entrants soient connectés, par l'intermédiaire de l'équipement de recherche de personnes à un récepteur de recherche de personnes, se procure un des récepteurs portables faisant partie de l'ensemble, et un code d'identification est attribué à ce récepteur,

d) la dite personne transmet, à partir de son appareil téléphonique ou analogue, un code d'accès de l'équipement de recherche der personnes à l'unité (μD) en même temps que le mode d'identification du récepteur de recherche portable effectif,

e) un appel ultérieur au numéro de téléphone de la personne est détecté par l'unité (μD) et est connecté à l'équipement de recherche der personnes, l'unité (μD) fournissant le code d'identification du récepteur de recherche de personnes portable correspondant à l'équipement de recherche de personnes,

f) une indication d'un appel est envoyée à partir de l'équipement de recherche de personnes au récepteur de recherche de personnes portable identifié, et

g) lorsque le récepteur portable est activé, la personne peut répondre à l'appel en composant un code de réponse au moyen d'un appareil téléphonique ou analogue.

Fig.1

Fig.2